# EUROPÄISCHE PATENTSCHRIFT

(11) **EP 2 226 181 B1**
(45) Veröffentlichungstag und Bekanntmachung des Hinweises auf die Patenterteilung: **30.03.2016**
(21) Anmeldenummer: 10154985.5
(22) Anmeldetag: 01.03.2010
(51) Int. Cl.: B29C 51/02, B29C 51/14, B41F 19/00, B29K 105/26, B29C 51/08, B29C 51/42, B41M 1/30, B41F 16/00

(54) **Verfahren und Vorrichtung zur Bedruckung und Verarbeitung einer Kunststoff-Folienbahn**
Method and device for printing and processing a plastic film sheet
Procédé et dispositif d'impression et de traitement d'une bande de feuille en plastique

(30) Priorität: 03.03.2009 DE 102009011543
(43) Veröffentlichungstag der Anmeldung: 08.09.2010
(73) Patentinhaber: Borgardt, Bernhard J., 27432 Bremervörde (DE)
(72) Erfinder: Borgardt, Bernhard J., 27432 Bremervörde (DE)
(74) Vertreter: Becker Kurig Straus

(56) Entgegenhaltungen:
- WO-A1-93/08018
- DE-A1- 2 462 050
- FR-A1- 2 806 033

## Beschreibung

Die Erfindung betrifft Verfahren und Vorrichtungen für Produkte, herstellbar aus einer bedruckten Kunststoff-Folienbahn. Die schrift WO 93/08018 offenbart ein verfahren bzw. Eine Vorrichtung gemäß den Merkmalen des Oberbegriffes des Anspruchs 1 bzw. 10. Insbesondere bezieht sich Die erfindung auf Kunststoffdeckel aus thermoformbarem Material in vorbedruckter Form.

Herkömmlicherweise werden thermogeformte Kunststoffdeckel aus verschiedenen Folien wie Polypropylen (PP), Polystyrol (PS), Polyethylen(-terephthalat) (PE(T)) usw. hergestellt. Die Dekoration erfolgt entweder durch den so genannten Trockenoffsetdruck auf dem fertigen Formteil oder durch Bedruckung unverformter Folie vor dem Formvorgang.

Ersteres kann erfolgen, indem ein neutraler (beispielweise weißer) Deckel bzw. eine entsprechende Verpackung tiefgezogen und dann bedruckt (so genannter Spiegel) wird. Die Druckmakulatur kann auf diese Weise gering gehalten werden. Das Bedrucken des fertigen Formteils hat aber Nachteile. Eine Randbedruckung ist nicht möglich. Dies führt dazu, dass die Gesamtverpackung einschließlich des Deckels keine einheitliche und durchgehende Bedruckung erhalten kann. Die Bildqualität des Drucks ist gering. Letztlich führt dies zu einer weniger hochwertig erscheinenden Verpackung.

Ein Beispiel für solche thermogeformten Kunststoffdeckel sind Deckel in der Lebensmittel-, Margarine-, Feinkost- und Eiscremeindustrie. Als besonderes Merkmal weisen diese Produkte häufig eine Bedruckung über den verformten Rand aus. Zurzeit erfolgt die Bedruckung auf dem Material des Endproduktes (Deckel) in seiner Gesamtstärke, die zwischen 0,2 und 0,6 mm vor dem Formvorgang beträgt. Prozessbedingt entsteht bei dieser Technik nach dem Formen und Ausstanzen ein Stanzgitter, welches mit Farbanhaftungen an der Oberfläche versehen ist.

Das bedeutet, dass dieses Stanzgitter aufgrund seiner Kontaminierung mit Farbe nicht wieder eingesetzt werden kann, zumindest nicht im gleichen Prozess. Es entstehen große Mengen Produktionsabfälle, die nur in zweitrangigen Anwendungen eingesetzt werden können. D.h. ein Recycling ist nur möglich in diesbezüglich unkritischen Anwendungen. Ein Beispiel für solche nicht farbgetreuen Recycling-Produkte sind Blumentöpfe, Gartenstühle und dergleichen. Eine Anwendung in kritischen Bereichen, insbesondere als Lebensmittelverpackung, ist aufgrund der Farbkontaminierung nicht mehr möglich. Diese Produktionsabfälle stellen eine herstellungsbedingte Makulatur dar.

Des Weiteren entsteht bei der Druckproduktion eine Druckmakulatur, die ebenfalls abhängig ist von der Stärke des zu verformenden Kunststoffmaterials. Sie beträgt auflagenabhängig zwischen 10 und 20 %. Das heißt, dass z.B. bei einem Kunststoffdeckel mit einem Artikelgewicht von 5 g brutto ca. 8 - 9 g Folie bedruckt werden. Hierauf ist die vorstehend erwähnte Makulatur zu rechnen, also ca. 1-2 g, so dass sich daraus zwangsläufig eine Materialbilanz ergibt, bei der für ein fertiges Produkt praktisch noch einmal die gleiche Menge an bedrucktem Folienmaterial benötigt wird, welches durch die Druckfarbe nicht mehr im gleichen Prozess einzusetzen ist.

Die Erfindung hat daher zur Aufgabe, ein verbessertes Produktionsverfahren bereitzustellen, mit dem der Anteil des Produktionsabfalls in Bezug auf das Endprodukt verringert werden kann, wobei gleichzeitig hochwertig bedruckte Endprodukte möglich sind. Weitere vorteilhafte Effekte der Erfindung werden aus der folgenden Beschreibung ersichtlich werden.

Gemäß einem ersten Aspekt der Erfindung wird ein Verfahren nach Anspruch 1 bereitgestellt.

Durch die erfindungsgemäße Wahl der Dicken der beiden Folien wird somit der durch Farbrückstände kontaminierte Anteil des Produktionsabfalls verringert. Die Bildung einer Verbundfolie ermöglicht hochwertige, vorbedruckte Endprodukte, insbesondere mit einem durchgehenden Druck auch auf dem Rand des Endprodukts. Die mit der Erfindung herstellbaren Produkte sind daher hochwertiger als Produkte aus nicht vorbedruckter Folie. Durch das Auftrennen des Stanzgitters wird der mit Farbrückständen kontaminierte Anteil der Deckfolie abgetrennt. Der Anteil der Trägerfolie wird, gegebenenfalls nach Entfernen von überbleibendem Haftvermittler, weiterverarbeitet. Da keine Farbrückstände mehr auf dem Anteil der Trägerfolie vorhanden sind, ist auch eine Weiterverarbeitung in kritischen Anwendungen möglich, wie Lebensmittelverpackungen. Der kontaminierte Anteil der Deckfolie kann entsorgt oder einer unkritischen Anwendung zwecks Verarbeitung zugeführt werden. Der vollständig recyclebare Anteil wird durch die Erfindung somit erhöht, während der Abfall oder zumindest eingeschränkt recyclebare Anteil verringert wird.

Andererseits wird durch den Aufbau der Verbundfolie aus zwei verschiedenen Folien ein späteres Trennen für ein verbessertes Recycling ermöglicht. Es werden somit durch die Erfindung in vorteilhafter Weise die Vorzüge der zwei Produktionsmethoden - einerseits hochwertige Produkte in vorgedruckter Form, andererseits geringerer Anfall von Produktionsabfall bei nicht vorbedruckten Produkten - kombiniert, ohne deren Nachteile ebenfalls mit einzuschließen.

Weiterhin ermöglicht die Erfindung eine größere Anzahl an Designs pro Gewichtseinheit der zu bedruckenden dünnen Folie, also beispielsweise pro Rolle der dünnen Folie.

Gemäß einer Ausführungsform erfolgt das Bedrucken der Deckfolie auf deren Vorderseite.

Im Kontext dieser Erfindung ist die Vorderseite jene Seite der Folie, die der Außenseite beispielsweise eines fertigen Behälterdeckels entspricht.

Gemäß einer Ausführungsform ist die Deckfolie transparent und das Bedrucken der Deckfolie erfolgt im Konterdruck auf deren Rückseite.

Im Kontext dieser Erfindung ist die Rückseite jene Seite der Folie, die der Innenseite beispielsweise eines fertigen Behälterdeckels entspricht. Dadurch kann ein verbesserter Schutz des Druckes, beispielsweise gegen Kratzer, erreicht werden. Da der Druck sandwichartig zwischen transparenter Deckfolie und Trägerfolie zu liegen kommt, ist er durch die Deckfolie vor Beschädigungen geschützt. Der Druck muss dabei im Konterdruckverfahren erfolgen.

Gemäß einer Ausführungsform erfolgt das Auftragen des Haftvermittlers auf die Deckfolie.

Gemäß einer Ausführungsform erfolgt das Auftragen des Haftvermittlers vollflächig.

Gemäß einer Ausführungsform erfolgt das Auftragen des Haftvermittlers nur in Teilbereichen, die durch das Endprodukt definiert werden. Dadurch wird der Einsatz von Haftvermittler minimiert. Insbesondere wird aber eine spätere Trennung der zwei Folien in dem Stanzgitter erleichtert. Idealerweise bliebe nach dem Ausstanzen des Endprodukts ein Stanzgitter übrig, das völlig frei von Haftvermittler ist. Die Haftung der verbleibenden Anteile von Träger- bzw. Deckfolie ist somit gering, und eine Trennung ist einfach.

Um eine zuverlässige Verbindung der zwei Folien auch im Randbereich des fertigen Produkts sicherzustellen, kann jedoch auch ein Bereich mit Haftvermittler versehen werden, der geringfügig größer ist als der Bereich des Endprodukts. In diesem Fall muss gegebenenfalls der restliche Haftvermittler von dem Stanzgitter entfernt werden, bevor eine Weiterverarbeitung des Stanzgitterrückstands erfolgen kann. Es ist ebenso denkbar, dass der geringe Flächenanteil von mit Haftvermittler bedecktem Stanzgitter vor der Weiterverarbeitung in einem separaten Arbeitsschritt weggestanzt wird.

Gemäß einer Ausführungsform umfasst das Verfahren
- Aufrollen des abgetrennten Anteils der Trägerfolie und/oder des abgetrennten Anteils der Deckfolie. Dadurch können die jeweiligen Anteile getrennt oder gemeinsam Platz sparend (zwischen-) gelagert werden.

Gemäß einer Ausführungsform umfasst das Verfahren
- Vermahlen des abgetrennten Anteils der Trägerfolie und/oder des abgetrennten Anteils der Deckfolie. Der jeweilige Anteil kann so leicht entweder entsorgt oder eingeschmolzen sowie wiederverwendet werden.

Gemäß einer Ausführungsform ist der Haftvermittler wärmeaktivierbar, und das Zusammenfügen der Trägerfolie und der Deckfolie schließt eine Wärmeaktivierung des Hatvermittlers ein. Die Wärmeaktivierung erfolgt vorzugsweise in einer Thermoformvorrichtung herkömmlicher Bauart.

Vorzugsweise kann der Haftvermittler ein "Hot Melt" Kleber sein, der etwa bei 80° - 120° aktivierbar ist.

Gemäß einer Ausführungsform sind die Träger- und die Deckfolie Polypropylen-, Polyethylen- oder Polystyrol-Folien.

Erfindungsgemäß beträgt die Dicke der Deckfolie 0,1 bis 0,2 der Dicke der Trägerfolie.

Die Dicke des Endprodukts setzt sich aus der Dicke von Träger- und Deckfolic zusammen. Die Erfindung ermöglicht durch eine geeignete Wahl der Deckfolie in Bezug auf die Dicke, das Endprodukt bei gleicher Trägerfolie mit unterschiedlichen Dicken zu produzieren.

Gemäß einem ersten Aspekt der Erfindung wird eine Vorrichtung nach Anspruch 10 bereitgestellt.

Die entsprechenden Druckbilder können gemäß der Erfindung in bekannten Druckverfahren wie Rotationsdruck, Offset-, Flexo- oder Thermodruck auf die Folie aufgebracht werden.

Gemäß einer Ausführungsform ist die Druckeinrichtung angepasst, die Vorderseite der Deckfolie zu bedrucken.

Gemäß einer Ausführungsform ist die Deckfolie transparent und die Druckeinrichtung angepasst, die Rückseite der Deckfolie im Konterdruck zu bedrucken.

Gemäß einer Ausführungsform ist die Auftrage-Einrichtung angepasst, den Haftvermittler auf die Deckfolie aufzutragen.

Gemäß einer Ausführungsform ist die Auftrage-Einrichtung angepasst, den Haftvermittler vollflächig aufzutragen. Gemäß einer anderen Ausführungsform ist die Auftrage-Einrichtung angepasst, den Haftvermittler nur in Teilbereichen aufzutragen, die durch das Endprodukt definiert werden.

Im Kontext dieser Erfindung ist "durch das Endprodukt definiert" zu verstehen als Bereich, der zwar durch das Endprodukt bestimmt wird, aber nicht notwendigerweise mit dem Bereich des zu formenden Endprodukts übereinstimmt. Um eine sichere Verbindung der zwei Folien zu gewährleisten, kann es beispielsweise erforderlich sein, eine etwas größere Fläche als die des Endprodukts mit Haftvermittler zu versehen. Ebenso kann es aber auch möglich sein, den Haftvermittler nur im Bereich des Außenrandes etwa eines Behälterdeckels aufzubringen, wenn eine feste Verbindung im Innenbereich des Deckels verzichtbar ist.

Gemäß einer Ausfühmngsform umfasst die Vorrichtung weiter
- eine Aufrolleinrichtung, in Vorschubrichtung hinter der Trennvorrichtung angeordnet und angepasst zum Aufrollen des abgetrennten Anteils der Trägerfolie und/oder des abgetrennten Anteils der Deckfolie.

Gemäß einer Ausführungsform umfasst die Vorrichtung weiter
- eine Mahleinrichtung, in Vorschubrichtung hinter der Trennvorrichtung angeordnet und angepasst zum Vermahlen des abgetrennten Anteils der Trägerfolie und/oder des abgetrennten Anteils der Deckfolie.

Es ist ebenfalls möglich, die zwei vorstehenden Ausführungsformen zu kombinieren, beispielsweise in der Form, dass der Anteil der Deckfolie vermahlen und der Anteil der Trägerfolie aufgerollt wird, oder umgekehrt.

Gemäß einer Ausführungsform umfasst die Vorrichtung weiter eine Aktivierungseinrichtung, in Vorschubrichtung vor der Zusammenfüge-Einrichtung angeordnet oder damit kombiniert, und angepasst zum Aktivieren eines wärmeaktivierbaren Haftvermittlers.

Zwischen der Zusammenfüge-Einrichtung zB einer Kaschiereinrichtung und der Thermoformvorrichtung sind bevorzugt eine Ober- und Unterheizung der Folienbahn vorgesehen, um diese auf eine für den Thermoformprozess erforderliche Temperatur zu erwännen.

### Kurze Beschreibung der Zeichnung

In der nachstehenden Beschreibung wird die Erfindung anhand von Ausführungsbeispielen erläutert, unter Bezug auf die Zeichnung, in der
Fig. 1 schematisch eine Ausführungsform eines Verfahrens gemäß der Erfindung zeigt; und
Fig. 2 schematisch eine Ausführungsform einer Vorrichtung gemäß der Erfindung zeigt.

### Detaillierte Beschreibung

Die Erfindung schlägt vor, die genannten Probleme mit den bekannten Produktionsverfahren dadurch zu beseitigen, dass die bedruckte Folie nicht die volle Endstärke des Fertigungsmaterials hat, sondern nur 10 - 20 %. Bei einem gewünschten Endmaterial mit einer Dicke von 400 µm also etwa 40 - 80 µm. Dieses dünnere Material sollte thermoformbar sein. Durch Verbindung mit einer entsprechend dimensionierten Trägerfolie wird dann die gewünschte Dicke des Endprodukts erreicht.

Die entsprechenden Druckbilder können in dem bekannten Rotationsdruckverfahren oder mittels Offset-, Flexo- oder Thermodruck auf die Folie aufgebracht werden. Gleichzeitig wird die Rückseite des "dünnen" Materials mit einem Haftmittel bzw. Heißsiegellack versehen, der es ermöglicht, diese dünne Folie im Tiefziehprozess auf die Trägerfolie aufzubringen. Die Trägerfolie ist naturgemäß um den Gewichts- und Stärkeanteil der dünnen Folie zu reduzieren. Die Dicke des aufgebrachten Druckbildes ist dabei zu berücksichtigen.

Die Aufbringung des Haftmittels auf die Rückseite kann sowohl vollflächig als auch partiell erfolgen. Insbesondere bei einer partiellen Auftragung nur dort, wo der Haftvermittler wirklich benötigt wird, wird eine Trennung der Verbundfolie nach dem Formprozess möglich. Zum Beispiel kann der Haftvermittler nur in dem Flächenbereich aufgetragen werden, der einem später auszustanzenden Produkt wie einem Kunststoff-Deckel entspricht. Möglicherweise sogar in einem noch kleineren Bereich wie etwa dem Rand des Deckels. Das Ergebnis davon ist, dass ein farbrückstandsfreies Stanzgitter zum erneuten Einsatz in der Produktion zur Verfügung steht.

Die Verbindung der beiden Folien erfolgt durch Wärme und Druck in im Prinzip bekannten Thermoformanlagen, welche normalerweise über eine Walzenvorheizung verfügen, die das zu verformende Material bis zu 90 °C erwärmt, bevor es in einem weiteren Schritt plastifiziert und damit formbar gemacht wird.

Durch die Aufspaltung des normalerweise verwendeten einlagigen Folienmaterials in zwei Eingangskomponenten kann eine dramatische Reduzierung der Druckmakulatur bezogen auf das Materialgewicht erreicht werden. Weiterhin kann ein wieder einsetzbarer Produktionsrückstand, etwa in Form eines Granulats, erzeugt werden, in dem Farbhaftungen vermieden wurden. Ein weiterer möglicher Nebeneffekt ist, dass die Lagerhaltung von bedruckten Produkten in Form von Folien um 80 - 90 % reduziert werden kann, sofern die eingesetzte dünnere Folie in vorbedruckter Form vorliegt.

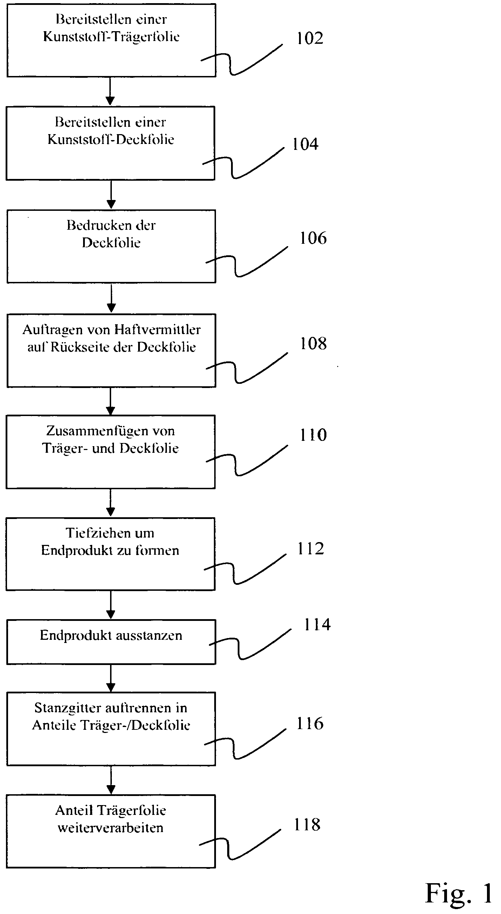

Figur 1 zeigt in schematischer Weise die Schritte einer Ausführungsform des Verfahrens der Erfindung, beispielsweise für die Herstellung des Deckels einer Lebensmittelverpackung. In Schritt 102 wird eine Kunststoff-Trägerfolie bereitgestellt, in Schritt 104 eine Kunststoff-Deckfolie. Dabei ergibt sich die Dicke des gewünschten Endprodukts im Wesentlichen durch die Dicke der Trägerfolie plus die Dicke der Deckfolie Einen geringen Beitrag liefert dazu auch das aufzudruckende Druckbild.

In Schritt 106 wird die dünnere Deckfolie bedruckt. Dieser Schritt erfolgt in dieser Ausführungsform nach dem Zuführen der Deckfolie. In alternativen Ausführungsformen kann die dünne Deckfolie auch bereits vorbedruckt bereitgestellt werden, in diesem Fall erfolgt der Druckschritt noch vorher. Der Druck kann beispielsweise im Rotationsdruckverfahren oder mittels Offset-, Flexo- oder Thermodruck erfolgen. Der Druck kann auf die Vorderseite der Deckfolie erfolgen, d.h. das Druckbild befindet sich im fertigen Produkt zuoberst. In anderen Ausführungsformen kann der Druck auch auf die Rückseite der Deckfolie erfolgen.

In Schritt 108 wird ein Haftvermittler wie etwa ein "Hot Melt"-Kleber oder Heißsiegellack auf die Rückseite der Deckfolie aufgetragen. Sofern im vorhergehenden Schritt 106 die Rückseite der Deckfolie bedruckt wurde, wird der Haftvermittler auf das Druckbild aufgetragen. In diesem Fall wird eine transparente Deckfolie verwendet, und das Druckbild wird im Konterdruck aufgedruckt.

Der Haftvermittler kann vollflächig auf die Deckfolie aufgetragen werden. In weiteren Ausführungsformen kann der Haftvermittler auch nur teilflächig aufgetragen werden, nämlich nur an den Stellen, wo im fertigen Produkt eine sichere Verbindung der Träger- und Deckfolie erforderlich ist. Dies schließt bei einer beispielhaften Lebensmittelverpackung, bsp. einem Margarinedeckel zumindest den Randbereich ein, es kann aber auch die gesamte Fläche des zu fertigenden Deckels mit Haftvermittler versehen werden, wenn über die gesamte Fläche des fertigen Produkts die Haftung der Folien aneinander gewünscht bzw. nötig ist. Obwohl es vorteilhaft ist, den Haftvermittler (nur) auf die Deckfolie aufzutragen, kann dieser grundsätzlich auch auf die Trägerfolie oder beide Folien aufgetragen werden.
In Schritt 110 werden Trägerfolie und Deckfolie zusammengefügt. Sofern der Haftvermittler ein wärmeaktivierbarer Haftvermittler ist, schließt dieser Schritt eine entsprechende Wärmeaktivierung desselben ein bzw. geht die Wärmeaktivierung diesem voraus. Sofern der Druck auf die Rückseite der Deckfolie erfolgte, befindet sich das Druckbild sandwichartig zwischen transparenter Deckfolie und der Trägerfolie. Es ist somit besonders geschützt, beispielsweise vor Kratzern, und trägt daher zu einem hochwertigen Endprodukt bei.

In Schritt 112 wird die gebildete Verbundfolie tiefgezogen, um die Lebensmittelverpackung zu formen. Dieser wird im anschließenden Schritt 114 aus der Verbundfolie ausgestanzt. Andere im Prinzip bekannte Verfahren zum Formen und Herauslösen des Endprodukts sind ebenfalls möglich.

Das nun vorliegende Stanzgitter wird in Schritt 116 in seine Anteile von Träger- und Deckfolie aufgetrennt. Dadurch wird erfindungsgemäß ein Anteil entsprechend der Trägerfolie erhalten, der frei von Farbrückständen und Haftvermittler ist. Gegebenenfalls muss ein Rest des Haftvermittlers entfernt werden, oder es kann der mit Haftvermittler versehene Restanteil der Trägerfolie entfernt werden, z.B. durch erneutes Wegstanzen. Der Anteil der Trägerfolie steht danach der Weiterverarbeitung bzw. Wiederverwendung in Schritt 118 zur Verfügung.

Da keine Verunreinigungen wie Farbrückstände mehr daran vorhanden sind, ist auch eine Verwendung in kritischen Anwendungen möglich. Beispielsweise kann das zurückbleibende Material der Trägerfolie erneut für Lebensmittelverpackungen verwendet werden, was bei den verunreinigten Rückständen von Produktionsverfahren des Stands der Technik nicht möglich ist. Der Anteil der Deckfolie kann entweder entsorgt werden, oder einer unkritischen Anwendung wie der Herstellung von Blumentöpfen und dergleichen zugeführt werden. Selbst im Entsorgungsfall ist aber die Abfallmenge gegenüber dem Stand der Technik deutlich verringert.

Sowohl die Anteile von Träger- als auch Deckfolie können nach dem Auftrennen entweder getrennt oder gemeinsam aufgerollt und/oder vermählen werden.

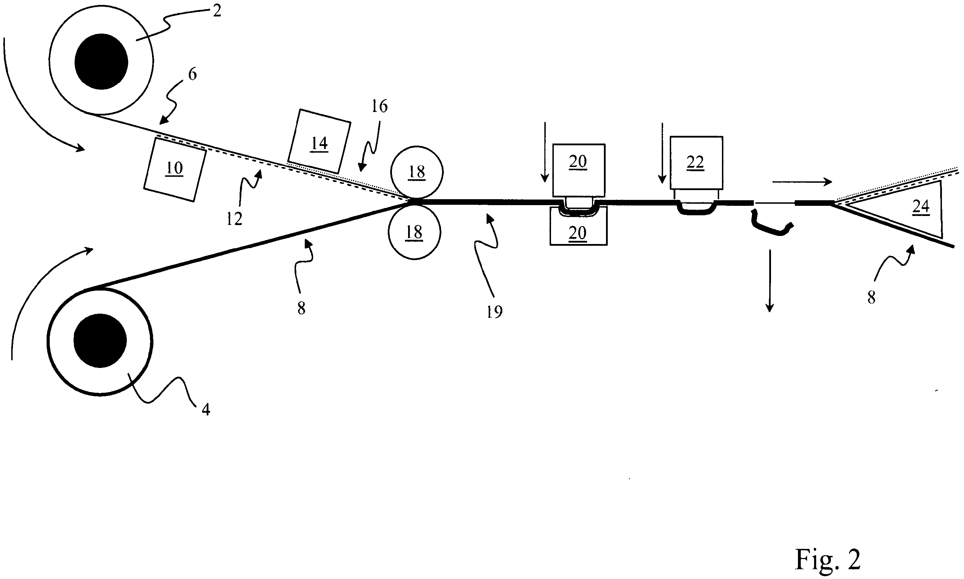

Figur 2 zeigt in schematischer Weise die Elemente einer Vorrichtung der Erfindung, beispielsweise für die Herstellung des Deckels einer Lebensmittelverpackung. Von einer Zufuhreinrichtung 4 wird eine Kunststoff-Trägerfolie 8 bereitgestellt. Die Zufuhreinrichtung 4 kann beispielsweise eine Rolle sein, von der die Trägerfolie 8 abgerollt wird. Die Trägerfolie 8 ist eine vergleichsweise dicke Folie, angedeutet durch die höhere Strichdicke.

Von einer weiteren Zufuhreinrichtung 2 wird eine Kunststoff Deckfolie 6 bereitgestellt. Die Zufuhreinrichtung 2 kann ebenfalls eine Rolle sein, von der die Deckfolie 6 abgerollt wird. Die Deckfolie 6 ist eine vergleichsweise dünne Folie, angedeutet durch die geringere Strichdicke. In anderen Ausführungsformen können die Träger- bzw. Deckfolie auch durch (Ko-) Extrusion einzeln oder gemeinsam bereitgestellt werden (nicht gezeigt).

Eine Auftrag-Einrichtung 10 ist angepasst, einen Haftvermittler 12 (angedeutet durch eine gestrichelte Linie) auf die Rückseite der Deckfolie 6 aufzubringen. Der Haftvermittler ist in bevorzugten Ausführungsformen ein wärmeaktivierbarer Haftvermittler. Eine Druckeinrichtung 14 ist angepasst, ein gewünschtes Druckbild 16 (angedeutet durch eine gepunktete Linie) auf die Vorderseite der Deckfolie 6 zu drucken. In dieser Ausführungsform ist die Druckeinrichtung 14 in Bahnvorschubrichtung hinter der Auftrag-Einrichtung bzw. Beschichtungseinrichtung 10 angeordnet, sie kann aber ebenso davor oder in gleicher Höhe angeordnet sein, da sich Haftvermittler und Druckbild auf verschiedenen Seiten befinden.

In alternativen Ausführungsformen (nicht gezeigt) erfolgt der Druck auf die Rückseite der Deckfolie, so dass sich Haftvermittler und Druckbild auf der gleichen Seite befinden. In diesem Fall ist die Auftrage-Einrichtung 10 in Bahnvorschubrichtung hinter der Druckeinrichtung 14 angeordnet.
Eine Zusammenfüge-Einrichtung 18, beispielsweise eine im Prinzip bekannte Thermoformanlage, fügt die Trägerfolie 8 und die Deckfolie 6 unter Druck- und Wärmeeinwirkung zusammen. Ein wänneaktivierbarer Haftvermittler wird dabei aktiviert. Die Aktivierung des Haftvermittlers kann auch vor dem Zusammenfügen mittels Druck erfolgen (nicht gezeigt).

Die gebildete Verbundfolie 19 wird nun einer Thermoformeinrichtung, beispielsweise einer Tiefziehpresse 20 zugeführt. In der Thermoformeinrichtung 20 wird das Endprodukt geformt, hier ist in beispielhafter Weise eine Lebensmittelverpackung gezeigt. Eine Stanzeinrichtung 22 ist dazu angepasst, den geformten Deckel aus der Verbundfolie 19 auszustanzen. Dieser kann danach durch eine nicht gezeigte Entnahmevorrichtung entnommen werden bzw. fällt nach unten heraus.

Zwischen der Zusammenfüge-Einrichtung 18 und der Thermoformvorrichtung 20 sind eine Ober- und Unterheizung der Folienbahn vorgesehen (nicht gezeigt), um eine thermoplastische Erwärmung der Folienbahnen zu gewährleisten. Die Temperaturen der Heizung liegen zwischen 150 und 200 °C.

Das verbleibende Stanzgitter wird einer Trennvonichtung 24 zugeführt. In dieser Trennvorrichtung 24 wird das Stanzgitter in die Anteile von Träger- und Deckfolie aufgetrennt. Nach dem Auftrennen bleibt idealerweise der Anteil der Trägerfolie zurück, getrennt davon der Anteil der Deckfolie mit Rückständen von Druckbild und Haftvermittler (hier angedeutet durch eine sandwichartige Struktur aus gestrichelter Linie, dünner durchgezogener Linie sowie gepunkteter Linie). Beide Restanteile können aufgerollt oder vermahlen werden (nicht gezeigt). Falls nötig, können Reste von Haftvermittler, die noch an dem Anteil der Trägerfolie haften, entfernt werden (nicht gezeigt).

Der verbleibende Rückstand entsprechend der Trägerfolie ist somit frei von Rückständen wie Farbe und Haftvermittler. Daher kann dieser leicht wiederverwendet werden, auch in kritischen Anwendungen wie einer beispielhaften Lebensmittelverpackung, bei der keinerlei Rückstände erlaubt sind. Der verbleibende Rückstand entsprechend der Deckfolie kann entsorgt werden, wobei die dabei entstehende Abfallmenge aufgrund der verringerten Dicke gegenüber dem Stand der Technik deutlich vermindert ist. Eine Wiederverwendung in unkritischen Anwendungen wie der Herstellung von Blumentöpfen und dergleichen ist ebenfalls möglich.

Das erfindungsgemäße Verfahren und die erfindungsgemäße Vorrichtung tragen somit zur Ressourcenschonung bei und sind daher auch ein Beitrag zur Nachhaltigkeit.

## Patentansprüche

1. Verfahren zur Bedruckung einer Kunststoff-Folienbahn, umfassend
- Bereitstellen (102) einer Kunststoff-Trägerfolie (8),
- Bereitstellen (104) einer Kunststoff-Deckfolie (6),
- Bedrucken (106) der Deckfolie (6),
- Auftragen (108) eines Haftvermittlers (12) auf die Rückseite zumindest einer der Folien (8, 6);
- Zusammenfügen (110) der Trägerfolie (8) und der Deckfolie (6), an deren Rückseiten, zu einer Verbundfolie (19);
- Tiefziehen (112) der Verbundfolie (19), um ein Endprodukt zu formen;
- Ausstanzen (114) des Endprodukts aus der Verbundfolie (19), wobei ein Stanzgitter verbleibt; **dadurch gekennzeichnet, dass** die Dicke der Deckfolie (6) 10% bis 20% der Dicke der Trägerfolie (8) beträgt, und dass
- Ein Auftrennen (116) des Stanzgitters in die Anteile von Träger- (8) und Deckfolie (6) Stattfindet, so dass ein Anteil der Trägerfolie (8) erhalten wird, der frei von Farbrückständen ist.

2. Verfahren nach Anspruch 1, wobei das Bedrucken (106) der Deckfolie (6) auf deren Vorderseite erfolgt.

3. Verfahren nach Anspruch 1, wobei die Deckfolie (6) transparent ist und das Bedruckten (106) der Deckfolie (6) im Konterdruck auf deren Rückseite erfolgt.

4. Verfahren nach einem der vorhergehenden Ansprüche, wobei das Auftragen (108) des Haftvermittlers (12) auf die Deckfolie (6) erfolgt.

5. Verfahren nach einem der vorhergehenden Ansprüche, wobei das Auftragen (108) des Haftvermittlers (12) vollflächig erfolgt.

6. Verfahren nach einem der Ansprüche 1 bis 4, wobei das Auftragen (108) des Haftvermittlers (12) nur in Teilbereichen erfolgt, die durch das Endprodukt definiert sind.

7. Verfahren nach Anspruch 1, weiter umfassend
- Aufrollen des abgetrennten Anteils der Trägerfolie (8) und/oder des abgetrennten Anteils der Deckfolie (6), und/oder
- Vermahlen des abgetrennten Anteils der Trägerfolie (8) und/oder des abgetrennten Anteils der Deckfolie (6).

8. Verfahren nach einem der vorhergehenden Ansprüche, wobei der Haftvermittler (12) wärmeaktivierbar ist, und wobei das Zusammenfügen (110) der Trägerfolie (8) und der Deckfolie (6) eine Wärmeaktivierung des Haftvermittlers (12) einschließt.

9. Verfahren nach einem der vorhergehenden Ansprüche, wobei die Träger- (8) und die Deckfolie (6) Polypropylen-, Polyethylen- oder Polystyrol-Folien sind.

10. Vorrichtung zur Bedruckung einer Kunststoff-Folienbahn, umfassend - eine kunststoff-trägerfolie (8); - eine kunststoff-deckfolie (6);
- eine erste Zufuhreinrichtunt (4), angepasst zum Bereitstellen Der Kunststoff-Trägerfolie (8);
- eine zweite Zufuhreinrichtung (2), angepasst zum Bereitstellen Der Kunststoff-Deckfolie (6), die Dicke der Deckfolie (6) 10% bis 20% der Dicke der Trägerfolie (8) beträgt,
- eine Druckeinrichtung (14), in Vorschubrichtung hinter den Zufuhreinrichtungen (2,4) angeordnet und angepasst zum Bedrucken der Deckfolie (6);
- eine Auftrag-Einrichtung (10), in Vorschubrichtung hinter der Druckeinrichtung (14) angeordnet und angepasst zum Auftragen eines Haftvermittlers (12) auf die Rückseite zumindest einer der Folien (8,6);
- eine Zusarnmenfüge-Einrichtune (18), in Vorschubrichtung hinter der Auftrage-Einrichtung (10) angeordnet und angepasst zum Zusammenfügen der Trägerfolie (8) und der Deckfolie (6) an deren Rückseiten zu einer Verbundfolie (19);
- eine Thermoformeinrichtung (20), in Vorschubrichtung hinter der Zusammenfüge-Einrichtung (18) angeordnet und angepasst zum Tiefziehen der Verbundfolie (19), um ein Endprodukt zu formen; und
- eine Stanzeinrichtund (22), in Vorschubrichtung hinter der Thermoformeinrichtung (20) angeordnet und angepasst zum Ausstanzen des Endprodukts aus der Verbundfolie (19), wobei ein Stanzgitter verbleibt; **dadurch gekennzeichnet, dass** und dass
- eine Trennvorrichtung (24), in Vorschubrichtung hinter der Stanzeinrichtung (22) angeordnet ist und angepasst zum Auftrennen des Stanzgitters in die Anteile von Träger- (8) und Deckfolie (6) IST, so dass ein Anteil der Trägerfolie (8) erhalten wird, der frei von Farbrückständen ist.

11. Vorrichtung nach Anspruch 10, wobei die Druckeinrichtung (14) angepasst ist, die Vorderseite der Deckfolie (6) zu bedrucken.

12. Vorrichtung nach Anspruch 10 oder 11, wobei die Deckfolie (6) transparent ist und die Druckeinrichtung (14) angepasst ist, die Rückseite der Deckfolie (6) im Konterdruck zu bedrucken.

13. Vorrichtung nach einem der Ansprüche 10 bis 12, wobei die Auftrage-Einrichtung (10) angepasst ist, den Haftvermittler (12) auf die Deckfolie (6) aufzutragen, und zwar vollflächig oder nur in Teilbereichen, die durch das Endprodukt definiert werden.

14. Vorrichtung nach einem der Ansprüche 10 bis 13, weiter umfassend
- eine Aufrolleinrichtung, in Vorschubrichtung hinter der Trennvorrichtung (24) angeordnet und angepasst zum Aufrollen des abgetrennten Anteils der Trägerfolie (8) und/oder des abgetrennten Anteils der Deckfolie (6), und/oder
- eine Mahleinrichtung, in Vorschubrichtung hinter der Trennvorrichtung (24) angeordnet und angepasst zum Vermahlen des abgetrennten Anteils der Trägerfolie (8) und/oder des abgetrennten Anteils der Deckfolie (6).

15. Vorrichtung nach einem der Ansprüche 10 bis 14, weiter umfassend
- eine Aktivierungseinrichtung, in Vorschubrichtung vor der Zusammenfüge-Einrichtung (18) angeordnet oder damit kombiniert, und angepasst zum Aktivieren eines wärmeaktivierbaren Haftvermittlers (12).

## Claims

1. Method for printing a plastic film sheet comprising
- providing (102) a plastic carrier film (8),
- providing (104) a plastic covering film (6),
- printing (106) the covering film (6),
- applying (108) an adhesion agent (12) to the rear side of at least one of the films (8, 6);
- joining (110) the carrier film (8) and the covering film (6) on the rear sides thereof to form a composite film (19);
- deep drawing (112) the composite film (19) to form an end product;
- punching out (114) the end product from the composite film (19), wherein a punch grid remains, **characterized in that** the thickness of the covering film (6) is 10% to 20% of the thickness of the carrier film (8) and a separation (116) of the punch grid into portions of the carrier (8) and covering film (6) takes place so that a portion of the carrier film (8) is obtained which is free from ink residues.

2. The method according to claim 1, wherein the printing (106) of the covering film (6) takes place on the front side thereof.

3. The method according to claim 1, wherein the covering film (6) is transparent and the printing (106) of the covering film (6) takes place in reverse printing on the rear side thereof.

4. The method according to any one of the preceding claims, wherein the application (108) of the adhesion agent (12) takes place on the covering film (6).

5. The method according to any one of the preceding claims, wherein the application (108) of the adhesion agent (12) takes place over the entire surface.

6. The method according to any one of claims 1 to 4, wherein the application (108) of the adhesion agent (12) takes place only in partial regions which are defined by the end product.

7. The method according to claim 1, further comprising
- rolling up the separated portion of the carrier film (8) and/or the separated portion of the covering film (6) and/or
- grinding the separated portion of the carrier film (8) and/or the separated portion of the covering film (6).

8. The method according to any one of the preceding claims, wherein the adhesion agent (12) is heat-activatable and wherein the joining (110) of the carrier film (8) and the covering film (6) includes a heat activation of the adhesion agent (12).

9. The method according to any one of the preceding claims, wherein the carrier (8) and the covering film (6) are polypropylene, polyethylene or polystyrene films.

10. Device for printing a plastic film sheet comprising
- a plastic carrier film (8);
- a plastic covering film (6);
- a first feed device (4) adapted to provide said plastic carrier film (8);
- a second feed device (2) adapted to provide said plastic covering film (6),
- a printing device (14) disposed downstream of the feed devices (2, 4) in the feed direction and adapted for printing the covering film (6);
- an application device (10) disposed downstream of the printing device (14) in the feed direction and adapted to apply an adhesion agent (12) to the rear side of at least one of the films (8, 6;
- a joining device (18) disposed downstream of the application device (10) in the feed direction and adapted for joining the carrier film (8) and the covering film (6) on the rear sides thereof to form a composite film (19);
- a thermoforming device (20) disposed downstream of the joining device (18) in the feed direction and adapted for deep drawing the composite film (19) in order to form an end product; and
- a punching device (22) disposed downstream of the thermoforming device (20) in the feed direction and adapted for punching out the end product from the composite film (19), wherein a punch grid remains, **characterized in that** the thickness of the covering film (6) is 10% to 20% of the thickness of the carrier film (8), and that
- a separating device (24) is disposed downstream of the punching device (22) in the feed direction and is adapted for separating the punch grid into portions of carrier (8) and covering film (6), so that a portion of the carrier film (8) is obtained which is free from ink residues.

11. The device according to claim 10, wherein the printing device (14) is adapted to print the front side of the covering film (6).

12. The device according to claim 10 or 11, wherein the covering film (6) is transparent and the printing device (14) is adapted to print the rear side of the covering film (6) by reverse printing.

13. The device according to any one of claims 10 to 12, wherein the application device (10) is adapted to apply the adhesion agent (12) to the covering film (6) and specifically over the entire surface or only in partial regions which are defined by the end product.

14. The device according to any one of claims 10 to 13, further comprising
- a rolling-up device disposed downstream of the separating device (24) in the feed direction and adapted for rolling up the separated portion of the carrier film (8) and/or the separated portion of the covering film (6) and/or
- a grinding device disposed downstream of the separating device (24) in the feed direction and adapted for grinding the separated portion of the carrier film (8) and/or the separated portion of the covering film (6).

15. The device according to any one of claims 10 to 14, further comprising
- an activating device disposed upstream of the joining device (18) in the feed direction and adapted for activating a heat-activatable adhesion agent (12).

## Revendications

1. Procédé pour l'impression d'une bande de feuille en plastique, comprenant
- la mise à disposition (102) d'une feuille de support en plastique (8),
- la mise à disposition (104) d'une feuille de recouvrement en plastique (6),
- l'impression (106) de la feuille de recouvrement (6),
- l'application (108) d'un agent adhésif (12) sur le verso d'au moins l'une des feuilles (8, 6) ;
- l'assemblage (110) de la feuille de support (8) et de la feuille de recouvrement (6) au niveau de leurs versos pour donner une feuille stratifiée (19) ;
- l'emboutissage (112) de la feuille stratifiée (19) pour former un produit final ;
- le découpage (114) du produit final à partir de la feuille stratifiée (19), une grille de découpage subsistant ;
**caractérisé en ce que** l'épaisseur de la feuille de recouvrement (6) est de 10% à 20% de l'épaisseur de la feuille de support (8) et **en ce qu'**une séparation (116) de la grille de découpage en les parts de feuilles de support (8) et de recouvrement (6) a lieu de telle sorte qu'une part de la feuille de support (8) est conservée, laquelle est libre de restes de matière colorante.

2. Procédé selon la revendication 1, dans lequel l'impression (106) de la feuille de recouvrement (6) s'effectue sur le recto de celle-ci.

3. Procédé selon la revendication 1, dans lequel la feuille de recouvrement (6) est transparente et l'impression (106) de la feuille de recouvrement (6) s'effectuant par impression inversée sur son verso.

4. Procédé selon l'une des revendications précédentes, dans lequel l'application (108) de l'agent adhésif (12) s'effectue sur la feuille de recouvrement (6).

5. Procédé selon l'une des revendications précédentes, dans lequel l'application (108) de l'agent adhésif (12) s'effectue sur toute la surface.

6. Procédé selon l'une des revendications 1 à 4, dans lequel l'application (108) de l'agent adhésif (12) s'effectue seulement dans des zones partielles qui sont définies par le produit final.

7. Procédé selon la revendication 1, comprenant par ailleurs
- l'enroulement de la part séparée de la feuille de support (8) et/ou de la part séparée de la feuille de recouvrement (6), et/ou
- le broyage de la part séparée de la feuille de support (8) et/ou de la part séparée de la feuille de recouvrement (6).

8. Procédé selon l'une des revendications précédentes, dans lequel l'agent adhésif (12) est thermo-activable, et dans lequel l'assemblage (110) de la feuille de support (8) et de la feuille de recouvrement (6) comprend une activation thermique de l'agent adhésif (12).

9. Procédé selon l'une des revendications précédentes, dans lequel les feuilles de support (8) et de recouvrement (6) sont des feuilles de polypropylène, de polyéthylène ou de polystyrène.

10. Dispositif pour l'impression d'une bande de feuille en plastique comprenant
- une feuille de support en plastique (8) ;
- une feuille de recouvrement en plastique (6) ;
- un premier dispositif d'amenée (4) adapté pour la mise à disposition de la feuille de support en plastique (8) ;
- un deuxième dispositif d'amenée (2) adapté pour la mise à disposition de la feuille de recouvrement en plastique (6) ;
- un dispositif d'impression (14), disposé en direction d'avancement derrière les dispositifs d'amenée (2, 4) et adapté pour l'impression de la feuille de recouvrement (6) ;
- un dispositif d'application (10), disposé en direction d'avancement derrière le dispositif d'impression (14) et adapté pour l'application d'un agent adhésif (12) sur le verso d'au moins l'une des feuilles (8, 6) ;
- un dispositif d'assemblage (18), disposé en direction d'avancement derrière le dispositif d'application (10) et adapté pour l'assemblage de la feuille de support (8) et de la feuille de recouvrement (6) au niveau de leurs versos pour donner une feuille stratifiée (19),
- un dispositif de thermoformage (20), disposé en direction d'avancement derrière le dispositif d'assemblage (18) et adapté pour l'emboutissage de la feuille stratifiée (19) pour former un produit final ; et
- un dispositif de découpage (22), disposé en direction d'avancement derrière le dispositif de thermoformage (20) et adapté pour le découpage du produit final à partir de la feuille stratifiée (19), une grille de découpage subsistant ;
**caractérisé en ce que** l'épaisseur de la feuille de recouvrement (6) est de 10% à 20% de l'épaisseur de la feuille de support (8) et **en ce qu'**un dispositif de séparation (24) est disposé en direction d'avancement derrière le dispositif de découpage (22) et est adapté pour la séparation de la grille de découpage en les parts de feuilles de support (8) et de recouvrement (6) de telle sorte qu'une part de la feuille de support (8) est conservée, laquelle est libre de restes de matière colorante.

11. Dispositif selon la revendication 10, dans lequel le dispositif d'impression (11) est adapté pour imprimer le recto de la feuille de recouvrement (6).

12. Dispositif selon la revendication 10 ou 11, dans lequel la feuille de recouvrement (6) est transparente et le dispositif d'impression (14) étant adapté pour imprimer le verso de la feuille de recouvrement (6) par impression inversée.

13. Dispositif selon l'une des revendications 10 à 12, dans lequel le dispositif d'application (10) est adapté pour appliquer l'agent adhésif (12) sur la feuille de recouvrement (6) et ce, sur toute la surface ou bien seulement dans des zones partielles qui sont définies par le produit final.

14. Dispositif selon l'une des revendications 10 à 13, comprenant par ailleurs
- un dispositif d'enroulement, disposé en direction d'avancement derrière le dispositif de séparation (24) et adapté pour l'enroulement de la part séparée de la feuille de support (8) et/ou de la part séparée de la feuille de recouvrement (6), et/ou
- un dispositif de broyage, disposé en direction d'avancement derrière le dispositif de séparation (24) et adapté pour le broyage de la part séparée de la feuille de support (8) et/ou de la part séparée de la feuille de recouvrement (6).

15. Dispositif selon l'une des revendications 10 à 14, comprenant par ailleurs
- un dispositif d'activation, disposé en direction d'avancement devant le dispositif d'assemblage (18) ou combiné avec celui-ci, et adapté pour l'activation d'un agent adhésif (12) pouvant être activé thermiquement.
